# EUROPÄISCHE PATENTSCHRIFT

(11) **EP 2 102 929 B1**
(45) Veröffentlichungstag und Bekanntmachung des Hinweises auf die Patenterteilung: **08.06.2011**
(21) Anmeldenummer: 08706003.4
(22) Anmeldetag: 25.01.2008
(51) Int. Cl.: H01M 8/02

(54) **VERFAHREN ZUR HERSTELLUNG EINER DICHTUNGSANORDNUNG FÜR EINE BRENNSTOFFZELLENEINHEIT UND DICHTUNGSANORDNUNG FÜR EINE BRENNSTOFFZELLENEINHEIT**
METHOD FOR PRODUCING A SEALING ARRANGEMENT FOR A FUEL CELL UNIT AND SEALING ARRANGEMENT FOR A FUEL CELL UNIT
PROCÉDÉ DE FABRICATION D'UN DISPOSITIF D'ÉTANCHÉITÉ POUR UNE UNITÉ PILE À COMBUSTIBLE ET DISPOSITIF D'ÉTANCHÉITÉ POUR UNE UNITÉ PILE À COMBUSTIBLE

(43) Veröffentlichungstag der Anmeldung: 23.09.2009
(73) Patentinhaber: ElringKlinger AG, 72581 Dettingen (DE)
(72) Erfinder: MAIER, Uwe, 72760 Reutlingen (DE); KIEFER, Thomas, 76275 Ettlingen (DE)
(74) Vertreter: Hörner, Andreas
(86) Internationale Anmeldenummer: PCT/EP2008/000592
(87) Internationale Veröffentlichungsnummer: WO 2009/092397

(56) Entgegenhaltungen:
- EP-A- 1 662 596
- EP-A- 1 768 204
- WO-A-2007/036361
- DE-A1- 19 805 142
- DE-A1-102004 048 525
- JP-A- 2007 200 568

## Beschreibung

Die vorliegende Erfindung betrifft ein Verfahren zur Herstellung einer Dichtungsanordnung für eine Brennstoffzelleneinheit.

Die Herstellung geeigneter Dichtungssysteme ist ein Schwerpunkt bei der Entwicklung von Hochtemperatur-Brennstoffzellensystemen (sogenannten SOFC-Brennstoffzellen). Solche Dichtungssysteme müssen hohen Anforderungen an die Gasdichtigkeit, elektrische Isolation, chemische Stabilität und Toleranz gegenüber mechanischer Beanspruchung (insbesondere beim Thermozyklieren) genügen.

Es ist bereits bekannt, zur Abdichtung in Brennstoffzellensystemen Glaslotdichtungen einzusetzen. Solche Glaslotdichtungen zeigen eine gute Gasdichtigkeit, elektrische Isolation und chemische Beständigkeit. Das Glaslot wird beim Fügezyklus weich, bevor es kristallisiert und aushärtet. Durch keramische Abstandshalter kann der Dichtspalt der Glaslotdichtung eingestellt werden. Übliche Dicken liegen dabei im Bereich von 300 µm +/- 50 µm.

Solche Glastlotdichtungen zeigen aber nur geringe Toleranzen gegenüber mechanischer Beanspruchung beim Thermozyklieren, bedingt durch die schlechte Wärmeleitfähigkeit und das spröde Verhalten des Werkstoffes.

Ferner ist es bekannt, zur Abdichtung in Brennstoffzellensystemen Metaillotdichtungen einzusetzen. Solche Metalllotdichtungen weisen besonders bei der Thermozyklierung aufgrund ihres duktilen Verhaltens Vorteile auf. Das Metalllot ist jedoch als elektrischer Isolator ungeeignet, weshalb eine zusätzliche Isolationsschicht vorgesehen werden muss. Es ist beispielsweise bekannt, als Isolationsschicht eine im Vakuumplasmaspritzverfahren hergestellte Aluminium-Magnesium-Spinell-Schicht zu verwenden.

Die Herstellung einer solchen Isolationsschicht mittels des Vakuumplasmaspritzverfahrens ist jedoch ein aufwendiger und kostenintensiver Prozessschritt. Aufgrund der herstellungsbedingten Toleranzen müssen entsprechend hohe Sicherheitsfaktoren gewählt werden, was in einer hohen Schichtdicke der Isolationsschicht resultiert, womit eine erhöhter Materialverbrauch verbunden ist. Außerdem induziert eine dickere Isolationsschicht des Aluminium-Magnesium-Spinells, welcher einen anderen thermischen Ausdehnungskoeffizienten aufweist als die in der Brennstoffzelleneinheit verwendeten Stahlmaterialien, Eigenspannungen. Diese Eigenspannungen können Risse und damit Undichtigkeiten im Brennstoffzellensystem verursachen.

Sowohl bei Glaslotdichtungen als auch bei Metalllotdichtungen ist die Anhaftung der Lotschicht an den abzudichtenden Bauteilen eine kritische Entwicklungsgröße. Besonders im Langzeitbetrieb des Brennstoffzellensystems verändert sich durch die ständig wachsende Oxidschicht an den aus Stahlmaterial bestehenden Bauelementen der Brennstoffzelleneinheit die Grenzfläche zwischen dem Stahlmaterial und dem Lotmaterial, was zu einem Verlust der Haftung des Lotmaterials am Stahlmaterial führen kann.

Der vorliegenden Erfindung liegt die Aufgabe zugrunde, ein Verfahren zur Herstellung einer Dichtungsanordnung für eine Brennstoffzelleneinheit zu schaffen, mittels welchem eine im Betrieb eines Brennstoffzellensystems langzeitstabile Dichtungsanordnung mit guter Gasdichtigkeit und guter elektrischer Isolationsfähigkeit herstellbar ist.

Diese Aufgabe wird erfindungsgemäß durch ein Verfahren zur Herstellung einer Dichtungsanordnung für eine Brennstoffzelleneinheit gelöst, welches folgende Verfahrensschritte umfasst:
- Beschichten eines Grundmaterials eines Bauteils mit einem oxidierbaren Beschichtungsmaterial;
- Eindiffundierenlassen des Beschichtungsmaterials in das Grundmaterial;
- Oxidieren des Beschichtungsmaterials zur Erzeugung einer Oxidschicht, die bei der Betriebstemperatur der Brennstoffzelleneinheit (im Bereich von 600°C bis 800°C) einen Flächenwiderstand von mindestens 1 kΩ·cm², vorzugsweise von mindestens 5 kΩ·cm² aufweist.

Der Erfindung liegt das Konzept zugrunde, mindestens eines der beiden durch die Dichtungsanordnung miteinander zu verbindenden Bauteile eines Brennstoffzellensystems mit einem oxidierbaren Beschichtungsmaterial zu beschichten, dieses Beschichtungsmaterial teilweise in das Grundmaterial des beschichteten Bauteils eindiffundieren zu lassen, anschließend das Beschichtungsmaterial zur Erzeugung einer Oxidschicht zu oxidieren und schließlich das mindestens eine mit der Oxidschicht versehene Bauteil mit dem jeweils anderen Bauteil zu verbinden, um so die Dichtungsanordnung für die Brennstoffzelleneinheit zu schaffen.

Durch diesen Herstellungsprozess, welcher einen Diffusionsschritt und einen anschließenden Oxidationsschritt umfasst, wächst die auf das Grundmaterial aufgebrachte Schicht aus dem Beschichtungsmaterial in das Grundmaterial hinein, so dass das Beschichtungsmaterial und die daraus erzeugte Oxidschicht fest im Grundmaterial verankert ist. Durch diese Verankerung wird die Anhaftung der Oxidschicht im Vergleich zu den bekannten Dichtsystemen verbessert. Der Verbund aus Oxidschicht und Grundmaterial kann dadurch höheren mechanischen Belastungen, insbesondere beim Thermozyklieren des Brennstoffzellensystems, ausgesetzt werden.

Außerdem wird durch den Diffusionsschritt erreicht, dass die Werkstoffeigenschaften, insbesondere die Härte, einen Gradienten aufweisen. So ist die Oxidschicht hart (spröde), das Grundmaterial (Stahl) weich (duktil) und die dazwischenliegende Diffusionsschicht hart/weich (spröde/duktil).

Ferner wird durch das Verwachsen des Beschichtungsmaterials und der daraus gebildeten Oxidschicht mit dem Grundmaterial die Oberfläche des Grundmaterials und insbesondere dessen Oxidationsverhalten modifiziert. Das Oxidationsverhalten des Grundmaterials wird durch die Oxidschicht so beeinflusst, dass eine Haftung der Oxidschicht an dem Grundmaterial auch im Langzeitbetrieb des Brennstoffzellensystems sichergestellt ist.

Als oxidierbares Beschichtungsmaterial wird vorzugsweise ein metallisches Beschichtungsmaterial verwendet.

Bei einer bevorzugten Ausgestaltung der Erfindung ist vorgesehen, dass das Beschichtungsmaterial Aluminium oder eine Aluminium-Legierung umfasst.

Für das Aufbringen des Beschichtungsmaterials auf das Grundmaterial kommen verschiedene Verfahren in Betracht.

So kann beispielsweise vorgesehen sein, dass das Grundmaterial durch Plattieren mit dem Beschichtungsmaterial beschichtet wird.

Alternativ oder ergänzend hierzu kann das Grundmaterial galvanisch mit dem Beschichtungsmaterial beschichtet werden.

Alternativ oder ergänzend hierzu kann auch vorgesehen sein, dass das Grundmaterial mittels eines PVD(Physical Vapour Deposition)-Verfahrens oder eines CVD(Chemical Vapour Deposition)-Verfahrens mit dem Beschichtungsmaterial beschichtet wird.

Im Falle einer Beschichtung mit Aluminium oder einer Aluminium-Legierung kann auch vorgesehen sein, dass das Grundmaterial durch Feueraluminieren mit dem Beschichtungsmaterial beschichtet wird.

Auch für die Durchführung der Oxidation des Beschichtungsmaterials kommt grundsätzlich jedes geeignete Oxidationsverfahren in Betracht.

Beispielsweise kann das Beschichtungsmaterial durch Erhitzung in einer sauerstoffhaltigen Atmosphäre oxidiert werden.

Insbesondere kann das Beschichtungsmaterial durch eine Temperaturbehandlung an Luft oxidiert werden.

Eine besonders gute Verankerung der erzeugten Oxidschicht in dem Grundmaterial wird erreicht, wenn das Beschichtungsmaterial durch Anodisieren oxidiert wird.

Zur Herstellung der Dichtungsanordnung wird die Oxidschicht vorzugsweise mit einem anderen Bauteil derselben Brennstoffzelleneinheit oder einer benachbarten Brennstoffzelleneinheit fest verbunden.

Dieses andere Bauteil kann, muss aber nicht, ebenfalls mit einer Oxidschicht versehen sein.

Bei einer bevorzugten Ausgestaltung der Erfindung ist vorgesehen, dass die Oxidschicht mit dem anderen Bauteil verlötet wird.

Da ein metallisches Lot aufgrund seines duktilen Verhaltens Vorteile bei der Thermozyklierung des Brennstoffzellensystems zeigt, ist es günstig, wenn die Oxidschicht mit dem anderen Bauteil mittels eines metallischen Lotes verlötet wird.

Die erforderliche elektrische Isolationswirkung der Dichtungsanordnung ist dabei durch den ausreichend hohen Flächenwiderstand der Oxidschicht gewährleistet.

Als besonders günstig hat es sich erwiesen, wenn die Oxidschicht mit dem anderen Bauteil mittels eines metallischen Lotes auf Silber-Basis, Kupfer-Basis und/oder Nickel-Basis verlötet wird.

Das erfindungsgemäße Verfahren zur Herstellung einer Dichtungsanordnung für eine Brennstoffzelleneinheit eignet sich besonders für den Fall, dass das Grundmaterial ein Chromoxid-bildendes Stahlmaterial umfasst.

Die mittels des erfindungsgemäßen Verfahrens hergestellte elektrisch isolierende Oxidschicht ist vorzugsweise eine Aluminiumoxidschicht, eine Aluminium-Magnesium-Spinellschicht, eine stabilisierte (insbesondere Yttriumstabilisierte) Zirkoniumoxidschicht oder eine Magnesiumoxidschicht.

Das Beschichtungsmaterial kann einen Zusatz von Bor, Lithium, Niob und/oder Magnesium enthalten, um den thermischen Ausdehnungskoeffizienten a der erzeugten Oxidschicht an den thermischen Ausdehnungskoeffizienten des Grundmaterials anzupassen.

Vorzugsweise wird der Zusatz von Bor, Lithium, Niob und/oder Magnesium so bemessen, dass der thermische Ausdehnungskoeffizient α der erzeugten Oxidschicht im Bereich von ungefähr 10·10⁻⁶K⁻¹ bis ungefähr 20·10⁻⁶K⁻¹, vorzugsweise im Bereich von ungefähr 11,5·10⁻⁶K⁻¹ bis ungefähr 13,5·10⁻⁶K⁻¹, liegt.

Ein Zusatzmaterial kann dem Beschichtungsmaterial bereits hinzugefügt werden, bevor das Grundmaterial mit dem Beschichtungsmaterial beschichtet wird.

Alternativ oder ergänzend hierzu kann auch vorgesehen sein, dass dem Beschichtungsmaterial, nachdem das Grundmaterial mit dem Beschichtungsmaterial beschichtet worden ist, ein Zusatzmaterial zugesetzt wird.

Ein solcher nachträglicher Zusatz eines Zusatzmaterials zu dem Beschichtungsmaterial kann insbesondere durch ein PVD(Physical Vapour Deposition)-Verfahren oder durch ein CVD(Chemical Vapour Deposition)-Verfahren erfolgen.

Die vorliegende Erfindung eignet sich zur Herstellung einer Dichtungsanordnung für eine Brennstoffzelleneinheit, welche im Betrieb des Brennstoffzellensystems langzeitstabil ist und eine gute Gasdichtigkeit und gute elektrische Isolation gewährleistet.

Eine solche Dichtungsanordnung für eine Brennstoffzelleneinheit umfasst Folgendes:
- ein erstes Bauteil aus einem Grundmaterial;
- eine Oxidschicht, die bei der Betriebstemperatur der Brennstoffzelleneinheit einen Flächenwiderstand von mindestens 1 kΩ·cm², vorzugsweise von mindestens 5 kΩ·cm² aufweist und durch Oxidation eines Beschichtungsmaterials gebildet ist; und
- eine zwischen dem Grundmaterial und der Oxidschicht angeordnete Diffusionsschicht, welche einen Gradienten des Beschichtungsmaterials aufweist.

Durch die zwischen dem Grundmaterial und der Oxidschicht angeordnete Diffusionsschicht ist die Oxidschicht so im Grundmaterial verankert, dass eine gute Haftung der Oxidschicht auch im Langzeitbetrieb des Brennstoffzellensystems gewährleistet ist.

Die Dichtungsanordnung eignet sich insbesondere zur Verwendung in einer Hochtemperatur-Brennstoffzelle, insbesondere einer SOFC (Solid Oxide Fuel Cell), mit einer Betriebstemperatur von beispielsweise mindestens 600°C.

Weitere Merkmale und Vorteile der Erfindung sind Gegenstand der nachfolgenden Beschreibung und der zeichnerischen Darstellung von Ausführungsbeispielen.

In den Zeichnungen zeigen:
- Fig. 1: eine schematische Darstellung aufeinanderfolgender Verfahrens- schritte a) bis f) eines Verfahrens zur Herstellung einer Dich- tungsanordnung für eine Brennstoffzelleneinheit; und
- Fig. 2: eine schematische Darstellung eines Aufwalzverfahrens zum Be- schichten eines Grundmaterials mit einem Beschichtungsmaterial.

Gleiche oder funktional äquivalente Elemente sind in allen Figuren mit denselben Bezugszeichen bezeichnet.

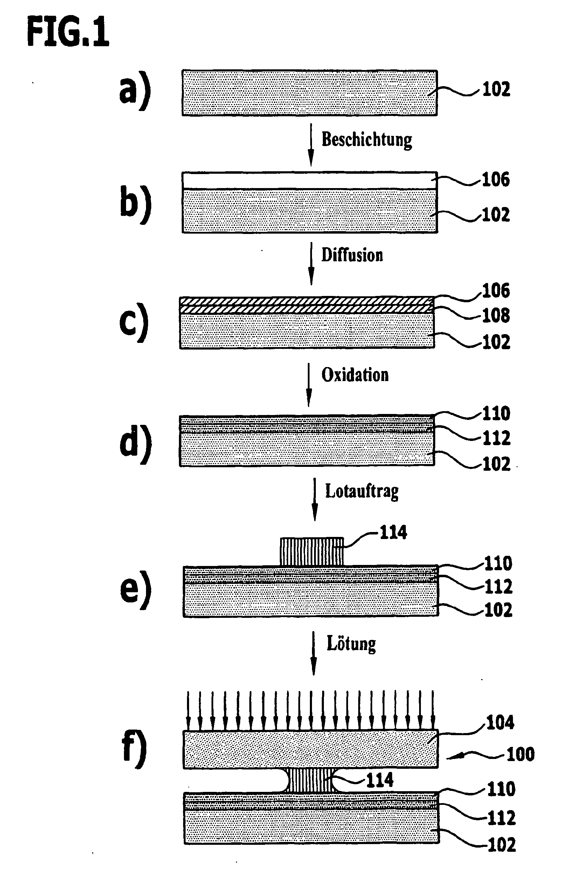

Ein Verfahren zur Herstellung einer als Ganzes mit 100 bezeichneten Dichtungsanordnung zum fluiddichten und elektrisch isolierenden Verbinden eines ersten metallischen Bauteils 102 und eines metallischen zweiten Bauteils 104 einer Brennstoffzelleneinheit ist in Fig. 1 schematisch dargestellt und umfasst die Verfahrensschritte:
a) Bereitstellung des ersten Bauteils 102 aus einem metallischen Grundmaterial;
b) Beschichten des Grundmaterials mit einem oxidierbaren Beschichtungsmaterial 106;
c) teilweises Eindiffundierenlassen des Beschichtungsmaterials in das Grundmaterial zur Bildung einer Diffusionsschicht 108 zwischen dem Grundmaterial und der Beschichtungsschicht 106;
d) Oxidieren des Beschichtungsmaterials zur Bildung einer Oxidschicht 110 und einer oxidierten Zwischenschicht 112;
e) Auftrag eines metallischen Lotmaterials 114 auf die freie Oberfläche der Oxidschicht 110;
f) Verlöten des metallischen zweiten Bauteils 104 mit der Oxidschicht 110 an dem ersten Bauteil 102 mittels des während der Lötung verflüssigten Lotmaterials 114, unter Anwendung eines Anpressdrucks, der durch die Pfeile 116 in Fig. 1 f) angedeutet ist.

Bei dem ersten Bauteil 102 kann es sich beispielsweise um ein Gehäuseoberteil eines Gehäuses einer Brennstoffzelleneinheit handeln, und bei dem zweiten Bauteil 104 kann es sich um ein Gehäuseunterteil einer in einer Stapelrichtung eines Brennstoffzellenstacks auf die erste Brennstoffzelleneinheit folgenden weiteren Brennstoffzelleneinheit handeln.

Solche Brennstoffzelleneinheiten mit zweiteiligen Gehäusen, die aus einem Gehäuseunterteil und einem Gehäuseoberteil zusammengesetzt sind, sind beispielsweise in der DE 103 58 458 A1 offenbart, auf welche diesbezüglich Bezug genommen wird und welche durch Inbezugnahme zum Bestandteil dieser Anmeldung gemacht wird.

Das erste Bauteil 102 und/oder das zweite Bauteil 104 kann insbesondere in der Brennstoffzelleneinheit als Bipolarplatte oder Interkonnektor dienen.

Das bereitgestellte erste Bauteil 102 kann als Grundmaterial einen Chromoxid (Cr₂O₃) bildenden Stahl umfassen.

Als Grundmaterial für das erste Bauteil 102 (und ebenso für das zweite Bauteil 104) sind insbesondere die folgenden Chromoxid bildenden Stähle geeignet:
- Der Stahl mit der Bezeichnung Crofer22APU des Herstellers ThyssenKrupp AG, Deutschland, mit der folgenden Zusammensetzung: 22,2 Gewichtsprozent Cr; 0,02 Gewichtsprozent Al; 0,03 Gewichtsprozent Si; 0,46 Gewichtsprozent Mn; 0,06 Gewichtsprozent Ti; 0,002 Gewichtsprozent C; 0,004 Gewichtsprozent N; 0,07 Gewichtsprozent La; 0,02 Gewichtsprozent Ni; Rest Eisen.
- Der Stahl mit der Bezeichnung F17TNb des Herstellers Imphy Ugine Precision, Frankreich, mit der folgenden Zusammensetzung: 17,5 Gewichtsprozent Cr; 0,6 Gewichtsprozent Si; 0,24 Gewichtsprozent Mn; 0,14 Gewichtsprozent Ti; 0,17 Gewichtsprozent C; 0,02 Gewichtsprozent N; 0,47 Gewichtsprozent Nb; 0,08 Gewichtsprozent Mo; Rest Eisen.

Der Stahl mit der Bezeichnung F17TNb hat die Werkstoffbezeichnungen 1.4509 nach EN, 441 nach AISI und S44100 nach UNS.
- Der Stahl mit der Bezeichnung IT-11 des Herstellers Plansee AG, Österreich, mit der folgenden Zusammensetzung: 25,9 Gewichtsprozent Cr; 0,02 Gewichtsprozent Al; 0,01 Gewichtsprozent Si; 0,28 Gewichtsprozent Ti; 0,08 Gewichtsprozent Y; 0,01 Gewichtsprozent C; 0,02 Gewichtsprozent N; 0,01 Gewichtsprozent Mo; 0,16 Gewichtsprozent Ni; Rest Eisen.
- Der Stahl mit der Bezeichnung Ducrolloy (ODS) des Herstellers Plansee AG, Österreich, mit der folgenden Zusammensetzung: 5,5 Gewichtsprozent Fe; 0,48 Gewichtsprozent Y; 0,01 Gewichtsprozent C; 0,01 Gewichtsprozent N; Rest Cr.

Das Grundmaterial des ersten Bauteils 102 aus einem der vorgenannten Stähle wird mit einer Beschichtung aus Aluminium oder aus einer Aluminium-Legierung versehen.

Diese Beschichtung kann beispielsweise galvanisch, durch Feueraluminieren, durch PVD (Physical Vapour Deposition), durch CVD (Chemical Vapour Deposition), durch thermisches Spritzen (vorzugsweise unter Schutzgas), insbesondere Vakuumplasmaspritzen, oder durch Plattieren, insbesondere durch Aufwalzen, erfolgen.

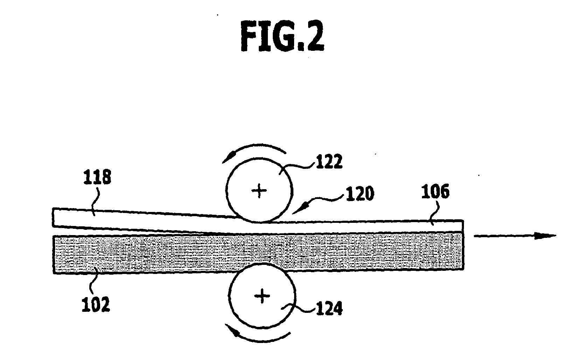

In Fig. 2 ist schematisch dargestellt, wie eine Folie 118 aus dem Beschichtungsmaterial gemeinsam mit einem Blech aus dem Grundmaterial des ersten Bauteils 102 durch einen Walzenspalt 120 zwischen zwei gegenläufig rotierenden Walzen 122 und 124 geführt und auf diese Weise durch Aufwalzen mit dem Grundmaterial verbunden wird.

Die Folie 118 kann insbesondere aus Aluminium oder einer Aluminiumlegierung gebildet sein.

Ferner kann die Folie 118 in eine Grundmatrix, beispielsweise aus Aluminium, eingebettete Zusätze von Magnesium, Lithium, Bor und/oder Niob enthalten, um den thermischen Ausdehnungskoeffizienten der später gebildeten Oxidschicht 110 an den thermischen Koeffizienten des Grundmaterials des ersten Bauteils 102 und damit an den thermischen Ausdehnungskoeffizienten anderer Bauelemente der Brennstoffzelleneinheit anzugleichen.

Nach der Beschichtung wird an dem Grundmaterial mit dem daran angeordneten Beschichtungsmaterial 106 ein Diffusionsprozess durchgeführt.

Hierzu wird das Grundmaterial mit dem daran angeordneten Beschichtungsmaterial 106 in einem Diffusionsofen auf eine Diffusionstemperatur im Bereich von beispielsweise ungefähr 500°C bis ungefähr 1.000°C erwärmt. Diese Diffusionstemperatur wird während einer Diffusionszeit von beispielsweise ungefähr 1 Stunde bis ungefähr 6 Stunden gehalten.

Der Diffusionsprozess kann unter einer Normalatmosphäre oder unter einer Schutzgasatmosphäre, beispielsweise in einer Argon-Atmosphäre mit Zusatz von fünf Mol-Prozent H₂, durchgeführt werden.

Während dieses Diffusionsprozesses diffundiert das Beschichtungsmaterial 106 teilweise in das Grundmaterial ein, so dass eine Zwischenschicht 108 zwischen dem Grundmaterial des ersten Bauteils 102 und dem Beschichtungsmaterial 106 entsteht, in welchem die Konzentration des Beschichtungsmaterials, von der beschichteten Seite ausgehend, allmählich abnimmt.

Durch diese Zwischenschicht 108 ist die Beschichtung fest im Grundmaterial des ersten Bauteils 102 verankert.

Ferner wird durch das Verwachsen der Beschichtung mit dem Stahl-Grundmaterial die Stahloberfläche und deren Oxidationsverhalten modifiziert.

Nach dem Diffusionsprozess wird eine Oxidation des oxidierbaren Beschichtungsmaterials durchgeführt.

Diese Oxidation kann beispielsweise durch Anodisierung erfolgen.

Die Anodisierung kann beispielsweise nach dem Schwefelsäureverfahren, nach dem Oxalsäureverfahren oder nach dem Chromsäureverfahren durchgeführt werden.

Besonders geeignet zur Oxidation des Beschichtungsmaterials durch Anodisierung ist das im folgenden näher beschriebene Gleichstrom-Schwefelsäure-Oxalsäure-Verfahren.

Hierbei wird das zu anodisierende Bauteil in einem ersten Schritt entfettet, durch Einbringen des Bauteils in ein Entfettungsmedium aus Alkali, Silikaten, Phosphaten und/oder Tensiden, das in einer Konzentration von 3 bis 5 Gewichtsprozent des Mediums in destilliertem Wasser (DI-Wasser) gelöst ist.

Die Entfettung wird bei einer Temperatur von ungefähr 60°C bis ungefähr 80°C und bei einem pH-Wert von ungefähr 11 bis ungefähr 13 während einer Entfettungszeit von ungefähr 1 Minute bis ungefähr 3 Minuten durchgeführt.

Nach dem Entfettungsschritt wird das zu anodisierende Bauteil gespült. Als Spülmedium wird destilliertes Wasser (DI-Wasser) verwendet. Der Spülvorgang findet bei Raumtemperatur während einer Spülzeit von beispielsweise ungefähr 1 Minute statt.

Nach diesem ersten Spülschritt wird das zu anodisierende Bauteil einem Beiz-Schritt unterzogen.

Als Beizmittel wird eine Lösung von beispielsweise 80 g Na₂CO₃ und 15 g NaF in 900 g destilliertem Wasser (DI-Wasser) verwendet.

In diesem Beizmittel wird das zu anodisierende Bauteil bei einer Beiztemperatur von beispielsweise ungefähr 50°C während einer Behandlungszeit von beispielsweise ungefähr 1,5 Minuten gebeizt.

Nach dem Beiz-Schritt wird das zu anodisierende Bauteil einem zweiten Spülschritt unterzogen.

Hierbei wird das Bauteil mit destilliertem Wasser (DI-Wasser) bei Raumtemperatur während einer Spülzeit von beispielsweise ungefähr 1 Minute gespült.

Nach diesem zweiten Spülschritt wird das zu anodisierende Bauteil anodisiert, d.h. als Anode in einen Elektrolyten eingetaucht und unter Stromfluss oxidiert.

Als Elektrolytmedium wird ein Gemisch aus einer ungefähr 10-15%igen Schwefelsäure und einer ungefähr 1-2%igen Oxalsäure verwendet.

Die Elektrode wird von einem Gleichstrom mit einer Stromdichte von ungefähr 1 A/dm² bis ungefähr 2 A/dm² bei einer Gleichspannung von ungefähr 20 V bis ungefähr 25 V durchflossen.

Die Elektrolyttemperatur beträgt beispielsweise ungefähr 20°C bis ungefähr 25°C.

Die Anodisierzeit beträgt, je nach Dicke des Beschichtungsmaterials, bis zu 20 Minuten, so dass im wesentlichen das gesamte oxidierbare Beschichtungsmaterial oxidiert wird.

Nach dem Anodisierschritt wird das anodisierte Bauteil einem dritten Spülschritt unterzogen.

Hierbei wird das Bauteil mit destilliertem Wasser (DI-Wasser) bei Raumtemperatur während einer Spülzeit von beispielsweise ungefähr 1 Minute gespült. Gegebenenfalls kann eine Nachbehandlung mit heißem destilliertem Wasser durchgeführt werden.

Wenn Zusätze zum Beschichtungsmaterial 106, welche den thermischen Ausdehnungskoeffizienten der später erzeugten Oxidschicht 110 an den thermischen Ausdehnungskoeffizienten des Grundmaterials angleichen sollen, noch nicht in der auf das Grundmaterial aufgewalzten Folie 118 enthalten sind, können diese Zusätze nach dem Aufwalzen der Folie 118 beispielsweise mittels PVD (Physical Vapour Deposition) oder CVD (Chemical Vapour Deposition) in das Beschichtungsmaterial 106 eingebracht werden.

Solche Zusätze können insbesondere Zusätze von Magnesium, Lithium, Bor und/oder Niob sein.

Die durch Anodisierung hergestellte Oxidschicht 110 weist bei der Betriebstemperatur der Brennstoffzelleneinheit (insbesondere bei einer Temperatur von 800°C) einen Flächenwiderstand von mindestens 1 kΩ·cm², vorzugsweise von mindestens 5 kΩ·cm², auf.

Diese elektrisch isolierende Oxidschicht 110 wird mittels eines metallischen Lotes mit dem zweiten Bauteil 104 verbunden.

Hierzu wird in einem Lotauftrag-Schritt das metallische Lotmaterial auf die freie Oberfläche der Oxidschicht 110 aufgetragen.

Der Lotauftrag kann beispielsweise im Siebdruckverfahren erfolgen.

Hierzu kann beispielsweise ein Sieb mit einer Maschendichte von 18 Maschen/cm² und einer Maschendicke von ungefähr 0,18 mm verwendet werden.

Die Nassschichtdicke des aufgetragenen Lotmaterials kann beispielsweise ungefähr 100 µm betragen.

Die Lötbreite des aufgetragenen Lotmaterials kann beispielsweise ungefähr 2 mm betragen.

Geeignete metallische Lotmaterialien sind beispielsweise ein Nickelbasislot, ein Kupferbasislot oder ein Silberbasislot.

Geeignete Lotmaterialien sind insbesondere die folgenden:
- das Nickelbasislot mit der Bezeichnung NI 102 gemäß der DIN EN 1044, mit der folgenden Zusammensetzung: 7 Gewichtsprozent Cr; 4,5 Gewichtsprozent Si; 3,1 Gewichtsprozent B; 3,0 Gewichtsprozent Fe; weniger als 0,06 Gewichtsprozent C; weniger als 0,02 Gewichtsprozent P; Rest Ni.
- das Kupferbasislot mit der Bezeichnung CU 202 gemäß der DIN EN 1044, mit der folgenden Zusammensetzung: 12 Gewichtsprozent Sn; 0,2 Gewichtsprozent P; Rest Cu.
- das Silberbasislot mit der Bezeichnung Ag4CuO, das von der Firma Innobraze GmbH, Deutschland, unter der Artikelnummer PA 9999999 vertrieben wird, mit der folgenden Zusammensetzung: 96 Mol-% Ag; 4 Mol-% CuO.

Nach dem Auftrag des Lotmaterials auf die Oxidschicht 110 oder, alternativ hierzu, auf eine freie, zu verlötende Oberfläche des zweiten Bauteils 104, werden das erste Bauteil 102 und das zweite Bauteil 104 für einen Lötvorgang mit einer Flächenlast von beispielsweise ungefähr 0,25 N/cm² (bezogen auf eine Lötfläche von beispielsweise 12 cm² und einem aufgelegten Gewicht von 4 kg) gegeneinander gepresst, und die Lötstelle wird gemäß dem folgenden Temperaturprofil erwärmt:
- Erwärmung mit einer Geschwindigkeit von ungefähr 100 K/h bis auf eine Löttemperatur von beispielsweise ungefähr 1.010°C;
- Halten der Löttemperatur während einer Haltezeit von ungefähr 30 Minuten;
- nach der Haltezeit Abkühlen mit einer Geschwindigkeit von ungefähr 40 K/h bis auf Raumtemperatur.

Damit ist die Herstellung der aus dem ersten Bauteil 102, dem zweiten Bauteil 104, der Oxidschicht 110 und dem Lotmaterial 114 bestehenden Dichtungsanordnung 100 abgeschlossen.

Die Leckrate dieser Dichtungsanordnung 100 beträgt maximal 0,001 Pa·l/s·cm.

Bei dem beschriebenen Herstellungsverfahren wird mindestens eines der zwei miteinander zu fügenden Stahlsubstrate (erstes Bauteil 102, zweites Bauteil 104) metallisch beschichtet. Diese Beschichtung wird teilweise in das Stahlsubstrat diffundiert. Anschließend wird die Beschichtung anodisiert und mit dem jeweils anderen Stahlsubstrat verbunden.

Hierdurch ergeben sich die folgenden Vorteile:
Aufgrund des Diffusionsschrittes und des Oxidationsschrittes wächst die erzeugte Oxidschicht in das Stahlsubstrat hinein. Durch diese Verankerung im Stahlsubstrat wird die Anhaftung der Oxidschicht verbessert, so dass der Verbund aus Oxidschicht und Grundmaterial höheren mechanischen Belastungen, insbesondere beim Thermozyklieren, ausgesetzt werden kann.

Außerdem wird durch den Diffusionsschritt erreicht, dass die Werkstoffeigenschaften, insbesondere die Härte, einen Gradienten aufweisen. So ist die Oxidschicht hart (spröde), das Grundmaterial (Stahl) weich (duktil) und die dazwischenliegende Diffusionsschicht hart/weich (spröde/duktil).

Durch das Verwachsen der Oxidschicht mit dem Stahl wird ferner die Oberfläche des Stahlsubstrats und deren Oxidationsverhalten modifiziert. Insbesondere wird das Oxidationsverhalten des Stahlsubstrats so beeinflusst, dass eine Haftung der Oxidschicht auch im Langzeitbetrieb der Brennstoffzelleneinheit sichergestellt werden kann.

Der thermische Ausdehnungskoeffizient α der Oxidschicht 110 liegt im Bereich von ungefähr 12·10⁻⁶K⁻¹ bis ungefähr 13·10⁻⁶K⁻¹ und ist damit ungefähr gleich groß wie der thermische Ausdehnungskoeffizient des Grundmaterials des ersten Bauteils 102 und des zweiten Bauteils 104.

## Patentansprüche

1. Verfahren zur Herstellung einer Dichtungsanordnung (100) für eine Brennstoffzelleneinheit, umfassend folgende Verfahrensschritte:
- Beschichten eines Grundmaterials eines Bauteils (102) mit einem oxidierbaren Beschichtungsmaterial (106);
- Eindiffundierenlassen des Beschichtungsmaterials (106) in das Grundmaterial;
- Oxidieren des Beschichtungsmaterials (106) zur Erzeugung einer Oxidschicht (110), die bei der Betriebstemperatur der Brennstoffzelleneinheit einen Flächenwiderstand von mindestens 1 kΩ·cm² aufweist.

2. Verfahren nach Anspruch 1, **dadurch gekennzeichnet, dass** das Beschichtungsmaterial (106) Aluminium oder eine Aluminium-Legierung umfasst.

3. Verfahren nach einem der Ansprüche 1 oder 2, **dadurch gekennzeichnet, dass** das Grundmaterial durch Plattieren mit dem Beschichtungsmaterial (106) beschichtet wird.

4. Verfahren nach einem der Ansprüche 1 oder 2, **dadurch gekennzeichnet, dass** das Grundmaterial galvanisch mit dem Beschichtungsmaterial (106) beschichtet wird.

5. Verfahren nach einem der Ansprüche 1 oder 2, **dadurch gekennzeichnet, dass** das Grundmaterial mittels eines PVD- oder CVD-Verfahrens mit dem Beschichtungsmaterial (106) beschichtet wird.

6. Verfahren nach Anspruch 2, **dadurch gekennzeichnet, dass** das Grundmaterial durch Feueraluminieren mit dem Beschichtungsmaterial (106) beschichtet wird.

7. Verfahren nach einem der Ansprüche 1 bis 6, **dadurch gekennzeichnet, dass** das Beschichtungsmaterial (106) durch eine Temperaturbehandlung an Luft oxidiert wird.

8. Verfahren nach einem der Ansprüche 1 bis 7, **dadurch gekennzeichnet, dass** das Beschichtungsmaterial (106) durch Anodisieren oxidiert wird.

9. Verfahren nach einem der Ansprüche 1 bis 8, **dadurch gekennzeichnet, dass** die Oxidschicht (110) mit einem anderen Bauteil (104) fest verbunden wird.

10. Verfahren nach Anspruch 9, **dadurch gekennzeichnet, dass** die Oxidschicht (110) mit dem anderen Bauteil (104) verlötet wird.

11. Verfahren nach Anspruch 10, **dadurch gekennzeichnet, dass** die Oxidschicht (110) mit dem anderen Bauteil (104) mittels eines metallischen Lotes verlötet wird.

12. Verfahren nach Anspruch 11, **dadurch gekennzeichnet, dass** die Oxidschicht (110) mit dem anderen Bauteil (104) mittels eines metallischen Lotes auf Silber-, Kupfer- und/oder Nickel-Basis verlötet wird.

13. Verfahren nach einem der Ansprüche 1 bis 12, **dadurch gekennzeichnet, dass** das Grundmaterial ein Chromoxid bildendes Stahlmaterial umfasst.

14. Verfahren nach einem der Ansprüche 1 bis 13, **dadurch gekennzeichnet, dass** die Oxidschicht (110) eine Aluminiumoxidschicht, eine Aluminium-Magnesium-Spinell-Schicht, eine stabilisierte Zirkoniumoxidschicht oder eine Magnesiumoxidschicht ist.

15. Verfahren nach einem der Ansprüche 1 bis 14, **dadurch gekennzeichnet, dass** das Beschichtungsmaterial (106) einen Zusatz von Bor, Lithium, Niob und/oder Magnesium enthält.

16. Verfahren nach einem der Ansprüche 1 bis 15, **dadurch gekennzeichnet, dass** dem Beschichtungsmaterial (106), nachdem das Grundmaterial mit dem Beschichtungsmaterial (106) beschichtet worden ist, ein Zusatzmaterial zugesetzt wird.

## Claims

1. Method for producing a sealing arrangement (100) for a fuel cell unit, comprising the following method steps:
- coating a base material of a component (102) with an oxidisable coating material; (106);
- letting the coating material (106) diffuse into the base material;
- oxidising the coating material (106) to produce an oxide layer (110), which, at the operating temperature of the fuel cell unit, has a surface resistivity of at least 1 kΩ·cm².

2. Method according to claim 1, **characterised in that** the coating material (106) comprises aluminium or an aluminium alloy.

3. Method according to either of claims 1 or 2, **characterised in that** the base material is coated with the coating material (106) by plating.

4. Method according to either of claims 1 or 2, **characterised in that** the base material is coated with the coating material (106) by electroplating.

5. Method according to either of claims 1 or 2, **characterised in that** the base material is coated with the coating material (106) by means of a PVD or CVD method.

6. Method according to claim 2, **characterised in that** the base material is coated with the coating material (106) by a hot-dip aluminising process.

7. Method according to any one of claims 1 to 6, **characterised in that** the coating material (106) is oxidised by a temperature treatment in air.

8. Method according to any one of claims 1 to 7, **characterised in that** the coating material (106) is oxidised by an anodising process.

9. Method according to any one of claims 1 to 8, **characterised in that** the oxide layer (110) is firmly connected to another component (104).

10. Method according to claim 9, **characterised in that** the oxide layer (110) is soldered to the other component (104).

11. Method according to claim 10, **characterised in that** the oxide layer (110) is soldered to the other component (104) by means of a metallic solder.

12. Method according to claim 11, **characterised in that** the oxide layer (110) is soldered to the other component (104) by means of a metallic solder based on silver, copper and/or nickel.

13. Method according to any one of claims 1 to 12, **characterised in that** the base material comprises a steel material forming a chromium oxide.

14. Method according to any one of claims 1 to 13, **characterised in that** the oxide layer (110) is an aluminium oxide layer, an aluminium magnesium spinel layer, a stabilised zirconium oxide layer or a magnesium oxide layer.

15. Method according to any one of claims 1 to 14, **characterised in that** the coating material (106) contains an addition of boron, lithium, niobium and/or magnesium.

16. Method according to any one of claims 1 to 15, **characterised in that** an additive material is added to the coating material (106), once the base material has been coated with the coating material (106).

## Revendications

1. Procédé de réalisation d'un système d'étanchéité (100) pour une unité de pile à combustible, comportant les étapes suivantes :
- dépôt d'un matériau de revêtement (106) oxydable sur un matériau de base d'une pièce (102) ;
- diffusion du matériau de revendication (106) à l'intérieur du matériau de base ;
- oxydation du matériau de revêtement (106) pour générer une couche oxyde (110) qui, à la température de service de l'unité de pile à combustible, présente une résistance de surface d'au moins 1 kΩ.cm².

2. Procédé selon la revendication 1, **caractérisé en ce que** le matériau de revêtement (106) comporte de l'aluminium ou un alliage d'aluminium.

3. Procédé selon la revendication 1 ou 2, **caractérisé en ce que** le matériau de base est revêtu par placage avec le matériau de revêtement (106).

4. Procédé selon la revendication 1 ou 2, **caractérisé en ce que** le matériau de base est revêtu par électrolyse avec le matériau de revêtement (106).

5. Procédé selon la revendication 1 ou 2, **caractérisé en ce que** le matériau de base est revêtu avec le matériau de revêtement (106) au moyen d'un procédé PVD.

6. Procédé selon la revendication 2, **caractérisé en ce que** le matériau de base est revêtu avec le matériau de revêtement (106) par aluminiage à chaud.

7. Procédé selon l'une quelconque des revendications 1 à 6, **caractérisé en ce que** le matériau de revêtement (106) est oxydé par un traitement thermique à l'air.

8. Procédé selon l'une quelconque des revendications 1 à 7, **caractérisé en ce que** le matériau de revêtement (106) est oxydé par anodisation.

9. Procédé selon l'une quelconque des revendications 1 à 8, **caractérisé en ce que** la couche oxyde (110) est assemblée de manière fixe à une autre pièce (104).

10. Procédé selon la revendication 9, **caractérisé en ce que** la couche oxyde (110) est brasée à l'autre pièce (104).

11. Procédé selon la revendication 10, **caractérisé en ce que** la couche oxyde (110) est brasée à l'autre pièce (104) au moyen d'un métal d'apport de brasage.

12. Procédé selon la revendication 11, **caractérisé en ce que** la couche oxyde (110) est brasée à l'autre pièce (104) au moyen d'un métal d'apport de brasage sur une base argent, cuivre et/ou nickel.

13. Procédé selon l'une quelconque des revendications 1 à 12, **caractérisé en ce que** le matériau de base comporte un matériau à base d'acier formant un oxyde de chrome.

14. Procédé selon l'une quelconque des revendications 1 à 13, **caractérisé en ce que** la couche oxyde (110) est une couche d'oxyde d'aluminium, une couche d'aluminium/magnésium/spinelle, une couche d'oxyde de zirconium stabilisé ou une couche d'oxyde de magnésium.

15. Procédé selon l'une quelconque des revendications 1 à 14, **caractérisé en ce que** le matériau de revêtement (106) contient une addition de bore, lithium, niobium et/ou magnésium.

16. Procédé selon l'une quelconque des revendications 1 à 15, **caractérisé en ce qu'**un matériau additionnel est ajouté au matériau de revêtement (106), une fois que le matériau de base a été revêtu avec le matériau de revêtement (106).
